Europäisches Patentamt

European Patent Office

Office européen des brevets

(19)

(11) Publication number: **0 156 130 B1**

# EUROPEAN PATENT SPECIFICATION

(12)

(45) Date of publication of patent specification: **18.09.91**  (51) Int. Cl.⁵: **B29C 47/00**, //B29K23:00,
B29L23:00

(21) Application number: **85101239.3**

(22) Date of filing: **06.02.85**

(54) **Process for the preparation of blown film and oriented film.**

(30) Priority: **07.02.84 NL 8400374**

(43) Date of publication of application:
**02.10.85 Bulletin 85/40**

(45) Publication of the grant of the patent:
**18.09.91 Bulletin 91/38**

(84) Designated Contracting States:
**AT BE CH DE FR GB IT LI LU NL SE**

(56) References cited:
**EP-A- 0 051 358**
**US-A- 3 754 067**
**US-A- 3 920 782**
**US-A- 4 243 619**
**US-A- 4 388 262**

**Encyclopedia of Chemical Technology, 3rd
edition vol. 18, p. 191-192, 195-199**

(73) Proprietor: **STAMICARBON B.V.**
**Mijnweg 1**
**NL-6167 AC Geleen(NL)**

(72) Inventor: **van der Molen, Theodorus Jacobus**
**Rott 27**
**NL-6294 NL Vijlen(NL)**

## Description

The invention relates to a process for the preparation of blown film, the film exhibiting, when subjected to X-ray diffraction analysis, an intensity ratio

$$\frac{max.}{min.}$$

of the 110 reflection band of at least 20 and an angle $\alpha$ between the average orientation direction of the polymer molecules and the fim extrusion direction of at most 20°, comprising: a polymer composition on the basis of polyethylene, which polyethylene has a density of 910-940 kg/m³, in which the polymer composition is, in molten condition, forced via an extruder through an annular die and is made to balloon out by means of a gas, supplied through an opening within the annular die, following which the polymer composition that has formed the balloon is cooled, flattened and rolled up, the polymer composition being processed at a temperature of the melt at the die gap of below 135°C.

Such a process for the preparation of blown film is well-known in itself and is described in, for instance, 'Petrothene Polyolefins ....... a processing guide' (a publication of the National Distillers and Chemical Corporation, 1971, 4th ed.).

Low-density polyethylene (LDPE) blown film has found large-scale application as packaging material. The main requirements to be met by packaging material concern mechanical properties, such as stiffness, tear resistance, tensile strength, puncture resistance, and the like.

Depending on the application, said material must often also satisfy requirements in the field of optical properties such as transparency, opacity and gloss.

Film to be processed into refuse bags, for instance, will need to have a good puncture resistance and tear properties, while film for carrier bags must in addition have high stiffness. In applications such as bread packaging, it is especially stiffness and opticals that play a part.

From 'Petrothene Polyolefins ....... a processing guide' it is known that the best optical properties are obtained when the polymer melt is processed at the highest possible temperatures. A melt temperature of 205 °C is not exceptional.

One of the factors affecting the mechanical properties is the degree of orientation of the melt.

A recent development in the field of blown film preparation from low-density polyethylene is the so-called long-stalk extrusion. This process, described in Plastics World of June 1982, pp. 62-64, starts from LDPE with a low melt index, which is processed at a temperature of 190 °C with an extra high frost line. The frost line is the place on the balloon where the polymer melt solidifies.

The main difference between this long-stalk extrusion and conventional extrusion lies in the degree of orientation of the melt. This results in blown film prepared by the long-stalk process having a better impact strength than conventional blown film. A drawback is that the stiffness and the tear resistance, especially in machine direction, deteriorate substantially. In addition, it is not possible to convert linear low-density polyethylene into film this way.

In US-A-4,388,262 an extrusion process is described in which, when extruding LDPE, the melt temperature is between 105°C and 180°C. However in this document no reference is made to the use of a combination of low temperature of the polymer melt at the die gap and a die gap width of at least 2 mm, or to the advantages effects on the mechanical and optical properties of blown film obtained by extrusion using the above mentioned combination of features, or to the better processability especially of polymer composition with a high melt index.

The object of the present invention is to provide a process for the preparation of blown film from a polymer composition on the basis of polyethylene with a density of 910-940 kg/m³ that is suitable for both linear and non-linear LDPE and that yields a film having good mechanical properties, notably high stiffness and good tear properties.

This object is achieved by the features of claim 1.

Surprisingly, when processing is carried out under conditions according to the invention, special orientation effects occur, as a result of which good mechanical properties are imparted to the film, such as good tear resistance, tensile strength, high stiffness, etc. This effect increases when the temperature of the melt at the location of the die gap is below 130 °C, so that processing at below 130 °C is to be preferred, and in particular at below 125 °C.

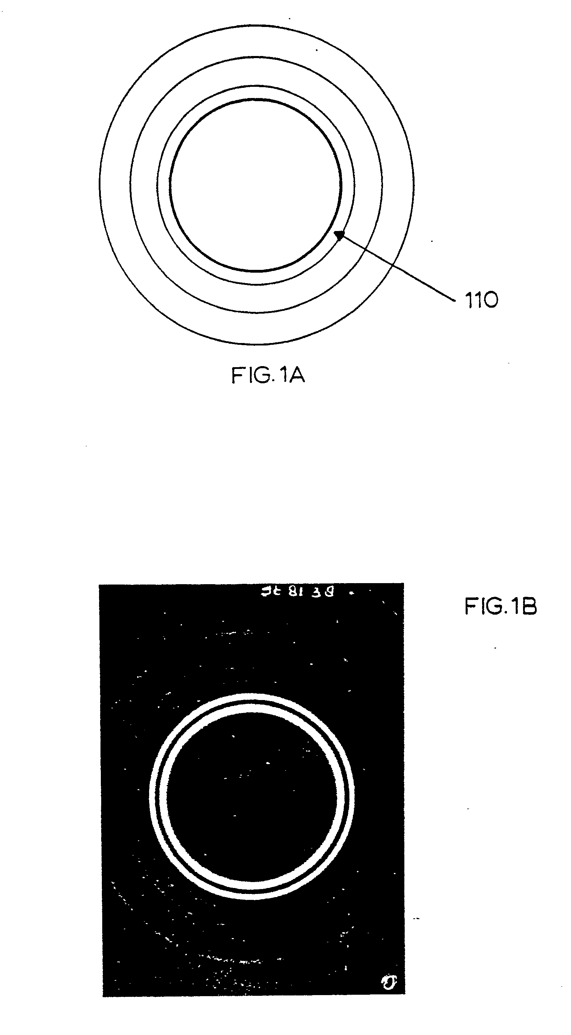

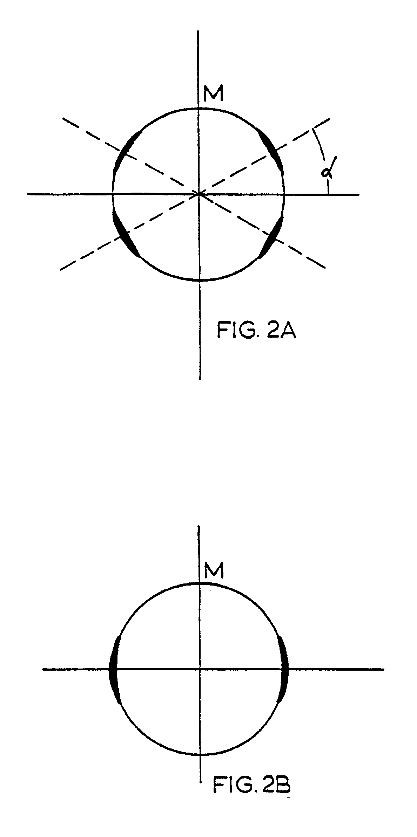

The degree and direction of orientation of a film can be determined by X-ray diffraction. This method yields information on the orientation of the crystalline fraction of the film. In non-oriented film the X-rays are scattered equally in all directions, resulting in annular bands without fluctuations in intensity. This is represented schematically in Figure 1A, while Figure 1B is a photograph of non-oriented polyethylene. In oriented polyethylene the scattering intensity is direction dependent, so that there are fluctuations in intensity. In polyethylene, the intensity is largest at a diffraction angle of the X-ray beam ($2\theta$) of ca. 21° (110 reflection of rhombic PE). The intensity fluctuations of this band are characteristic of the crystallite orientation and thus of the orientation of the crystallized molecules. The molecule direction is perpendicular to the associated intensity maximum. The average direction of orientation is characterized by the angle $\alpha$ which is the angle between the average orientation direction of the polymer molecules and the film extrusion direction (Fig. 2A). The more the average molecule direction and the direction of extrusion coincide, the nearer $\alpha$ will approach 0° (Fig. 2B).

The distribution of the molecule direction (degree of orientation) manifests itself in the extensiveness of the intensity maximum. So the ratio intensity maximum: intensity minimum is an index of the degree of orientation.

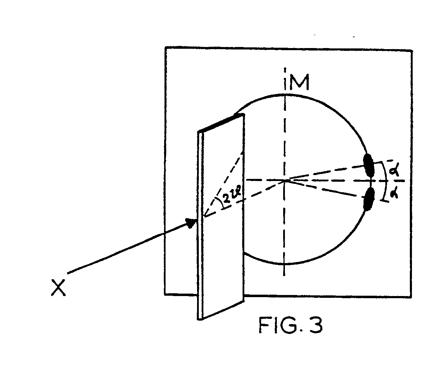

Fig. 3 is a diagram of an X-ray photograph. X is the direction of the X-ray beam, $2\theta$ is the diffraction angle of the X-ray beam, M is the direction of film extrusion (machine direction), $\alpha$ is the angle between the average direction of orientation of the polymer molecules and the direction of film extrusion.

It has now been found that films that have, when subjected to X-ray diffraction analysis, an intensity ratio

$$\frac{max.}{min.}$$

of the 110 reflection band of at least 20 and an angle $\alpha$ between the average orientation direction of the polymer molecules and the film extrusion direction of at most 20°, have special mechanical properties, such as good tear resistance, tensile strength, high stiffness, etc. Especially films with an intensity ratio

$$\frac{max.}{min.} > 50$$

and an angle $\alpha \leq 15°$, and in particular $\alpha \leq 10°$, possess these properties to a high degree.

A degree of orientation thus high has not previously been found in known films on the basis of low-density polyethylene.

Polymer compositions that are suitable for being processed into blown film in accordance with the invention generally contain at least 50 % polyethylene homo- and/or copolymer with a density of 910-940 $kg/m^3$. Low-density polyethylene homopolymer, copolymers of ethylene with one or more $C_3$-$C_{15}$ alkenes, copolymers of ethylene and one or more polar comonomers with a comonomer content of at most 10 wt. %, relative to the ethylene (e.g. vinylacetate, methacrylate) can be applied with good results.

Also mixtures are suitable, like for instance mixtures of polyethylene homo- and/or copolymers with a density of 910-940 $kg/m^3$, or mixtures of polyethylene homo- and/or copolymers having a density of 910-940 $kg/m^3$ with low-density polyethylene copolymers (with a density less than 940 $kg/m^3$), high density polyethylene (with a density in excess of 940 $kg/m^3$) and/or polypropylene. In these mixtures preferably at least 70 wt. %, relative to the total polymer content, of the homo-and/or copolymer with a density of 910-940 $kg/m^3$ is present.

For the preparation of films having good optical properties, the use of a polymer composition on the basis of polyethylene homopolymer or a copolymer of ethylene and one or more polar comonomers with a comonomer content of at most 10 wt. % relative to the ethylene, is to be recommended. The process according to the invention is particularly suitable for the preparation of films having good mechanical and optical properties from low-density polyethylene homopolymer or ethylene vinylacetate copolymer.

Furthermore, various additives, such as stabilisers, slip agents, fillers, colourants, waxes and the like, may be present. The amount by weight of additives usually will not exceed 20 % of the amount by weight of polymer.

The melt index of these polymer compositions, determined according to ASTM D 1238, may have the usual values, for instance between 0.3 and 30 dg/min. In view of the low processing temperature, however, it is to be recommended to choose a melt index of not lower than 2 dg/min. The favourable effect that low-temperature processing has on the mechanical properties, decreases when the melt index exceeds 25 dg/min, and is most pronounced at a melt index of at most 20 dg/min, in particular at most 17 dg/min.

The advantage of the invention is that also polymer compositions having a relatively high melt index can be processed into blown film with good mechanical properties.

Often, packaging film must not only satisfy requirements with respect to its mechanical properties, but also requirements relating to its optical properties. The optical properties of the film improve when use is made of a polymer composition having a melt index of at least 5 dg/min, in particular at least 8 dg/min.

Blown film is obtained by forcing a polymer melt through an annular die, following which it is made to balloon out. In processing LDPE into blown film, the die gap usually is 0.4 to 0.9 mm, and this is also suitable for the process according to the invention. Larger die gaps, for instance of 5 or 10 mm, can also be applied; in addition, the geometry of the die may be varied. It has now been found that the mechanical properties of the film improve when the die gap used is at least 2 mm and at most 5 mm, in particular at least 3 mm.

In combination with the low processing temperature, these larger die gaps result in even better mechanical properties, notably in good stiffness and tear properties, while the optical properties are also improved.

In blown film extrusion, the polymer composition exits the annular die in molten condition and is subsequently blown up. The resulting balloon is cooled by contacting it with relatively cool air or water.

Balloon diameter divided by annular die diameter is called the blow-up ratio. This may vary between 1 and 6, but generally is 1.5 to 4. These values can also be applied in the process according to the invention, yielding good results.

The process according to the invention is suitable especially for the preparation of monolayer film, but can also be used for multilayer film.

The invention will now be elucidated on the basis of some examples.

Examples and comparative examples 1 through 15
Blown film was prepared under conditions as shown in the table. Use was made of a Schwabenthan extrusion equipment with a screw diameter of 30 mm and a length/diameter ratio of 24 : 1. The diameter of the annular die was 5 cm.

The melt temperature at the die gap was determined by infrared measurement. The film output was 50 g/min. Of the film, the following properties were determined:
modulus of elasticity according to ASTM D 1922;
yield strength and tensile strength according to ISO R 527;
puncture resistance, determined from the energy required to puncture the film with a plunger at a rate of 50 mm/min; notched tear resistance according to a method derived from DIN 53363, but with the notch at the centre of the film, at a drawing-rate of 2.5 cm/min;
gloss according to ASTM D 523;
opacity according to ASTM D 1003;
transparency according to the Electro Evans Ltd. method.

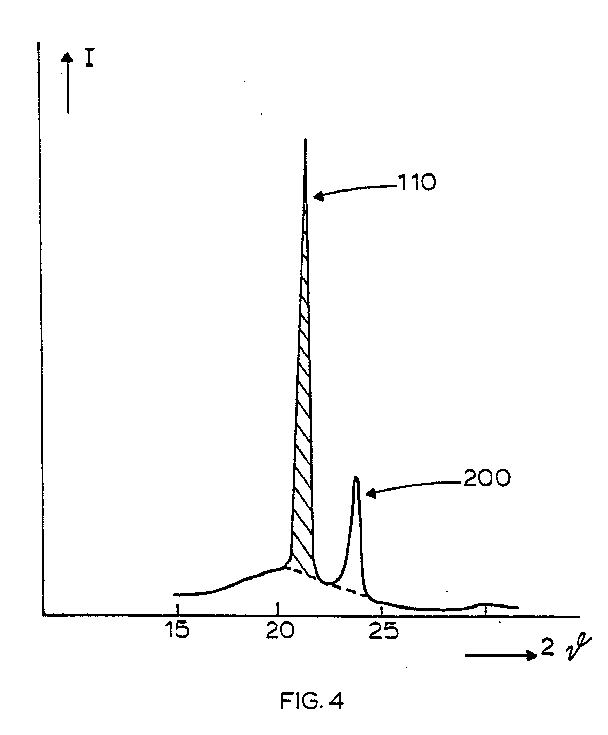

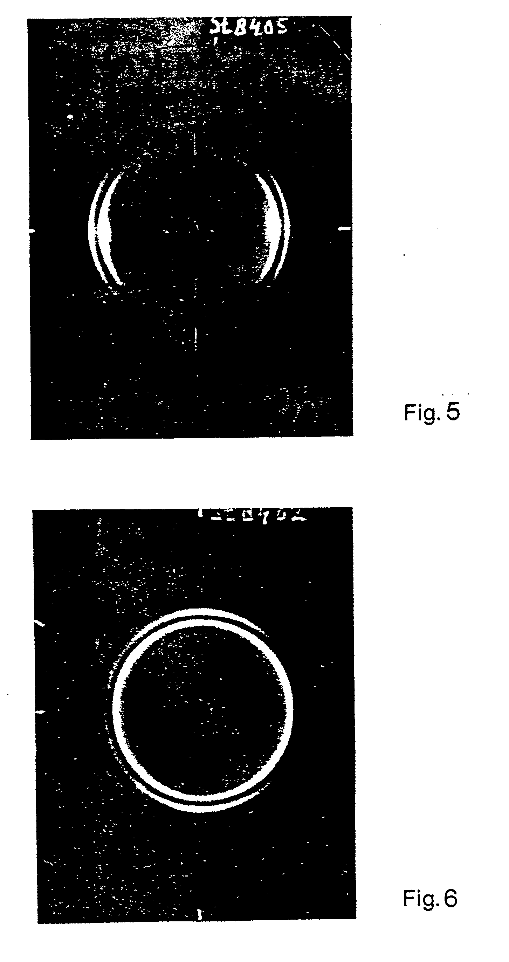

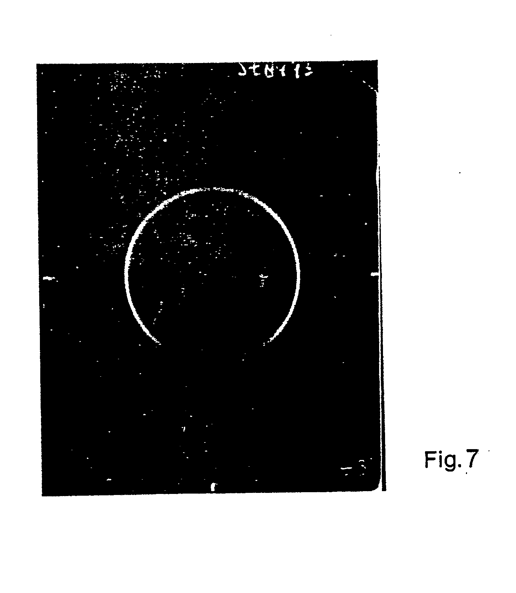

The X-ray diffraction measurement was performed using $CuK\alpha$ radiation (50 kV, 35 mA, Ni-filter) and a Statton camera. Parallel film radiation was employed (see Fig. 3). The sample-photograph distance was 5 cm. Densitometry of the photograph was carried out along the diameters of the circular bands for the directions M and $\alpha$. For one densitometer scan the changes in the intensity are recorded as a function of the diffraction angle of the X-ray beam ($2\theta$, Fig. 4). For densitometrical purposes use was made of an Enraf Nonius microdensitometer, model 1, and the method described in C.G. Vonk & A.P. Pijpers, J. Appl. Cryst., 14, 8, (1981).

The correction for the amorphous background radiation is carried out as indicated in Figure 4, taking into account the characteristic shape of the scattering curve for amorphous PE.

The shaded part of Figure 4 represents the crystalline fraction of the 110 reflection band.

Notes:

1. not measured.
2. the notch did not tear further, so that drawing phenomena occurred.
3. owing to the high opacity, the value for transparency cannot be determined in a reliable way.
4. $\alpha$ can only be determined in a reliable way if the intensity ratio

$$\frac{max.}{min.} > 10.$$

5. Intensity ratios

$$\frac{max.}{min.} > 100$$

are represented as ∞. This is due to the small value of the minimum intensity.

Table

| | comp. ex. 1 | ex. 2 | comp. ex. 3 | ex. 4 | comp. ex. 5 | ex. 6 | comp. ex. 7 |
|---|---|---|---|---|---|---|---|
| Polymer composition | EVA-2.5 % | EVA-2.5 % | LDPE + 10 % C8-LL | LDPE + 10 % C8-LL | LDPE | LDPE | film taken |
| density, $kg/m^3$ | 925 | 925 | 922 | 922 | 921 | 921 | from the market, |
| melt index, dg/min | 2 | 2 | 2.5 | 2.5 | 4.5 | 4.5 | same polymer |
| temperature, °C | 154 | 112 | 168 | 122 | 159 | 107 | composition as in |
| die gap, μm | 600 | 600 | 600 | 600 | 600 | 2000 | ex. 5 and 6 |
| frost line height, cm | 15 | 15 | 15 | 15 | 15 | 15 | — |
| blow-up ratio | 2 | 2 | 2 | 2 | 2 | 2 | — |
| film thickness, μm | 25 | 30 | 18 | 17 | 20 | 20 | 30 |
| modulus of elasticity // $N/mm^2$ | 156 | 190 | 227 | 221 | 171 | 281 | 176 |
| ⊥ | 149 | 213 | 271 | 229 | 204 | 284 | 171 |
| yield strength, $N/mm^2$ // | 9.5 | 13 | 12.5 | 20 | 10 | 15 | n.m.[1] |
| ⊥ | 9 | 10 | 11.5 | 18 | 10.5 | 12 | n.m.[1] |
| puncture resistance, J/m | n.m.[1] | n.m.[1] | 535 | n.m.[1] | 361 | 403 | n.m.[1] |
| notched tear resistance, // $kJ/m^2$ | 351 | 332 | 290 | 321 | 227 | 243 | n.m.[1] |
| ⊥ | 275 | 647[2] | 244 | 473[2] | 316[2] | 108 | n.m.[1] |
| tensile strength, $N/mm^2$ // | 26 | 32 | 35 | 55 | 22 | 43 | n.m.[1] |
| ⊥ | 21 | 17 | 22 | 27 | 14.5 | 14.5 | n.m.[1] |
| gloss, o/oo | 55 | 38 | 21 | 30 | 52 | 25 | n.m.[1] |
| opacity, % | 7 | 13 | 13 | 16 | 7 | 23 | n.m.[1] |
| transparency, EEL | 22 | 34 | 41 | n.r.d.[3] | 20 | n.r.d.[3] | n.m.[1] |
| $I \frac{max.}{min.}$ | n.m.[1] | n.m.[1] | n.m.[1] | n.m.[1] | n.m.[1] | n.m.[1] | 9 |
| α, degrees | n.m.[1] | n.m.[1] | n.m.[1] | n.m.[1] | n.m.[1] | n.m.[1] | 25[4] |

EP 0 156 130 B1

Table (continued)

| | comp. ex. 8 | ex. 9 | ex. 10 | ex. 11 | comp. ex. 12 | Fig. 5 ex. 13 | Fig. 6 comp. ex. 14 | Fig. 7 comp. ex. 15 |
|---|---|---|---|---|---|---|---|---|
| Polymer composition | LDPE | LDPE | LDPE | LDPE | LDPE | LDPE | LDPE | film taken from the market, same polymer composition as in ex. 13 and 14 |
| density, kg/m³ | 921 | 921 | 921 | 921 | 921 | 926.5 | 926.5 | — |
| melt index, dg/min | 9 | 9 | 14 | 7 | 7 | 2 | 2 | — |
| temperature, °C | 170 | 120 | 113 | 120 | 162 | 130 | 170 | — |
| die gap, μm | 2000 | 2000 | 2000 | 3000 | 1000 | 4000 | 600 | — |
| frost line height, cm | 8 | 8 | 8 | 11 | 10 | 10 | 26 | 25 |
| blow-up ratio | 2 | 2 | 2 | 2 | 2 | 2 | 2 | 209 |
| film thickness, μm | 25 | 25 | 25 | 25 | 25 | 30 | 30 | 242 |
| modulus of elasticity // N/mm² | 127 | 198 | 192 | 221 | 143 | 394 | 173 | n.m. |
| modulus of elasticity ⊥ | 136 | 212 | 239 | 250 | 182 | 304 | 179 | n.m. |
| yield strength, N/mm² // | 9.5 | 11 | 9.5 | n.m. | n.m. | 23 | 12.5 | n.m. |
| yield strength ⊥ | 8.5 | 9 | 9.5 | n.m. | n.m. | 16 | 11.5 | n.m. |
| puncture resistance, J/m | 459 | 484 | 243 | 351 | 305 | 299 | 261 | n.m. |
| notched tear resistance, kJ/m² // | 277 | 364 | 351[2] | 342[2] | 234[2] | 368 | 224 | n.m. |
| notched tear resistance ⊥ | 171 | 765[2] | 23.5 | n.m. | n.m. | 185[2] | n.m. | n.m. |
| tensile strength, N/mm² // | 19 | 30.5 | 10.5 | n.m. | n.m. | n.r. | n.m. | n.m. |
| tensile strength ⊥ | 11 | 10 | 80 | 58 | 70 | n.r. | 59 | 4 |
| gloss, o/oo | 85 | 73 | 5 | 16 | 14 | 26 | 9 | 04 |
| opacity, % | 7 | 4.5 | 4 | sr.d.³ | 9.5 | 22 | 7 | |
| transparency, EEL I // | 4.1 | 6.2 | n.m. | 19 | 27 | sr.d.³ | 6 | |
| ⊥ | n.m. | n.m. | n.m. | | | | 284 | |
| α, degrees | n.m. | n.m. | | | | 0 | | |

## Claims

1. Process for the preparation of blown film, the film exhibiting, when subjected to X-ray diffraction analysis, an intensity ratio

$$\frac{\text{max.}}{\text{min.}}$$

of the 110 reflection band of at least 20 and an angle α between the average orientation direction of the polymer molecules and the film extrusion direction of at most 20°, comprising: a polymer composition on the basis of polyethylene, which polyethylene has a density of 910-940 kg/m³, in which the polymer composition is, in molten condition, forced via an extruder through an annular die and is made to balloon out by means of a gas, supplied through an opening within the annular die, following which the polymer composition that has formed the balloon is cooled, flattened and rolled up, the polymer composition being processed at a temperature of the melt at the die gap of below 135° C, characterised in that the annular die gap is having a width of at least 2 mm and the polymer composition is having a melt index between 2 and 25 dg/min.

2. Process according to claim 1, characterised in that the polymer composition is processed at a temperature of the melt at the die gap of below 130° C.

3. Process according to claim 2, chracterised in that the polymer composition is processed at a temperature of the melt at the die gap of below 125° C.

4. Process according to any one of claims 1-3, characterised in that use is made of a polymer composition having a melt index between 5 and 10 dg/min.

5. Process according to claim 4, characterised in that use is made of a polymer composition having a melt index between 8 and 17 dg/min.

6. Process according to any one of claims 1-5, characterised in that a die gap of at least 2 mm and at most 5 mm is applied.

7. Process according to claim 6, characterised in that a die gap of at least 3 mm is applied.

8. Process according to any one of claims 1-7, characterised in that monolayer blown film is prepared.

9. Process according to any one of claims 1-8, characterised in that use is made of a polymer composition on the basis of polyethylene homopolymer.

10. Process according to any one of claims 1-8, characterised in that use is made of a polymer composition on the basis of a copolymer of ethylene and one or more polar comonomers, with a comonomer content of at most 10 wt.% relative to the ethylene.

11. Process according to claim 9, chracterised in that use is made of polyethylene homopolymer.

12. Process according to claim 10, characterised in that use is made of ethylene vinylacetate copolymer.

**Revendications**

1. Procédé de préparation d'une pellicule soufflée, pellicule qui, quand elle soumise à une analyse par diffraction des rayons X, présente un rapport d'intensités max./min de la bande de réflexion 110 d'au moins 20 et un angle $\alpha$ entre la direction d'orientation moyenne des molécules du polymère et la direction de l'extrusion de la pellicule ne dépassant pas 20°, qui comprend une composition de polymère à base de polyéthylène, polyéthylène dont la masse volumique est de 910 à 940 kg/m³, la composition du polymère à l'état fondu étant refoulée par une extrudeuse à travers une filière annulaire et est amenée à gonfler à l'aide d'un gaz fourni à travers une ouverture dans la filière annulaire, à la suite de quoi la composition de polymère ayant formé le gonflement est refroidie, aplatie et enroulée, la composition de polymère étant traitée à une température de la masse fondue dans l'intervalle de filière de moins de 135° C, caractérisé en ce que l'intervalle de filière annulaire présente une largeur d'au moins 2 mm et en ce que la composition de polymère présente un indice de fluidité à l'état fondu compris entre 2 et 25 dg/min.

2. Procédé selon la revendication 1, caractérisé en ce qu'on traite la composition de polymère à une température de la masse fondue à l'intervalle de filière de moins de 130° C.

3. Procédé selon la revendication 2, caractérisé en ce qu'on traite la composition du polymère à une température de la masse fondue à l'intervalle de filière de moins de 125° C.

4. Procédé selon l'une quelconque des revendications 1 à 3, caractérisé en ce qu'on utilise une composition de polymère ayant un indice de fluidité à l'état fondu compris entre 5 et 10 dg/min.

5. Procédé selon la revendication 4, caractérisé en ce qu'on utilise une composition de polymère ayant un indice de fluidité à l'état fondu compris entre 8 et 17 dg/min.

6. Procédé sel on l'une quelconque des revendications 1 à 5, caractérisé en ce qu'on utilise un intervalle de filière d'au moins 2 mm et au maximum de 5 mm.

7. Procédé selon la revendication 6, caractérisé en ce qu'on utilise un intervalle de filière d'au moins 3 mm.

8. Procédé selon l'une quelconque des revendications 1 à 7, caractérisé en ce qu'on prépare une pellicule soufflée monocouche.

9. Procédé selon l'une quelconque des revendications 1 à 8, caractérisé en ce qu'on utilise une composition polymère à base d'un polyéthylène homopolymère.

10. Procédé selon l'une quelconque des revendications 1 à 8, caractérisé en ce qu'on utilise une composition polymère à base d'un copolymère d'éthylène avec au moins un comonomère polaire, la teneur en comonomères étant au maximum de 10% en poids par rapport à l'éthylène.

11. Procédé selon la revendication 9, caractérisé en ce qu'on utilise un polyéthylène homopolymère.

12. Procédé selon la revendication 10, caractérisé en ce qu'on utilise un copolymère éthylène/acétate de vinyle.

**Patentansprüche**

1. Verfahren zur Herstellung einer Blasfolie, welche Folie, wenn sie Röntgenbeugungsanalyse unterworfen wird, ein Intensitätsverhältnis

$$\frac{\text{max.}}{\text{min.}}$$

der 110 Reflexionsbande von mindestens 20 und einen Winkel $\alpha$ zwischen der mittleren Orientierungsrichtung der Polymermoleküle und der Folienextrusionsrichtung von höchstens 20° zeigt, umfassend: eine Polymerzusammensetzung auf Basis von Polyäthylen, welches Polyäthylen eine Dichte von 910 bis 940 kg/m³ aufweist, in dem die Polymerzusammensetzung in geschmolzenem Zustand über einen Extruder durch eine Ringform gedrückt und durch ein Gas zu einem Ballon aufgeblasen wird, das durch eine Öffnung in der Ringform zugeführt wird, worauf die Polymerzusammensetzung, die den Ballon gebildet hat, abgekühlt, flachgedrückt und aufgewickelt wird, wobei die Polymerzusammensetzung bei einer Temperatur der Schmelze am Formspalt von weniger als 135°C verarbeitet wird, dadurch gekennzeichnet, daß der Ringformspalt eine Breite von mindestens 2 mm aufweist und die Polymerzusammensetzung einen Schmelzindex zwischen 2 und 25 dg/min hat.

2. Verfahren nach Anspruch 1, dadurch gekennzeichnet, daß die Polymerzusammensetzung bei einer Temperatur der Schmelze am Formspalt von weniger als 130°C verarbeitet wird.

3. Verfahren nach Anspruch 2, dadurch gekennzeichnet, daß die Polymerzusammensetzung bei einer Temperatur der Schmelze am Formspalt von weniger als 125°C verarbeitet wird.

4. Verfahren nach einem der Ansprüche 1 bis 3, dadurch gekennzeichnet, daß eine Polymerzusammensetzung mit einem Schmelzindex von 5 bis 10 dg/min verwendet wird.

5. Verfahren nach Anspruch 4, dadurch gekennzeichnet, daß eine Polymerzusammensetzung mit einem Schmelzindex von 8 bis 17 dg/min verwendet wird.

6. Verfahren nach einem der Ansprüche 1 bis 5, dadurch gekennzeichnet, daß ein Formspalt von mindestens 2 mm und höchstens 5 mm angewandt wird.

7. Verfahren nach Anspruch 6, dadurch gekennzeichnet, daß ein Formspalt von mindestens 3 mm angewandt wird.

8. Verfahren nach einem der Ansprüche 1 bis 7, dadurch gekennzeichnet, daß eine einschichtige Folie hergestellt wird.

9. Verfahren nach einem der Ansprüche 1 bis 8, dadurch gekennzeichnet, daß eine Polymerzusammensetzung auf Basis von Polyäthylenhomopolymer verwendet wird.

10. Verfahren nach einem der Ansprüche 1 bis 8, dadurch gekennzeichnet, daß eine Polymerzusammensetzung auf Basis eines Copolymers von Äthylen und eines oder mehrerer polarer Comonomere mit einem Comonomergehalt von höchstens 10 Gew.%, bezogen auf das Äthylen, verwendet wird.

11. Verfahren nach Anspruch 9, dadurch gekennzeichnet, daß Polyäthylenhomopolymer verwendet wird.

12. Verfahren nach Anspruch 10, dadurch gekennzeichnet, daß Äthylen-Vinylacetatcopolymer verwendet wird.

FIG.1A

FIG.1B

FIG. 2A

FIG. 2B

FIG. 3

FIG. 4

Fig. 5

Fig. 6

Fig. 7